Europäisches Patentamt

European Patent Office

Office européen des brevets

(11) Veröffentlichungsnummer: **0 280 154**
**A2**

(12) # EUROPÄISCHE PATENTANMELDUNG

(21) Anmeldenummer: **88102226.3**

(22) Anmeldetag: **16.02.88**

(51) Int. Cl.4: **B29C 67/18**

(30) Priorität: **26.02.87 DE 3706227**

(43) Veröffentlichungstag der Anmeldung:
**31.08.88 Patentblatt 88/35**

(84) Benannte Vertragsstaaten:
**BE DE ES FR GB IT NL SE**

(71) Anmelder: **BAYER AG**
**Konzernverwaltung RP Patentabteilung**
**D-5090 Leverkusen 1 Bayerwerk(DE)**

(72) Erfinder: **Born, Eberhard**
**Strudener Strasse 104**
**D-5000 Köln 80(DE)**

(54) **Formbares Halbzeug für die Fertigung biegesteifer Formteile.**

(57) Zur Fertigung von Formteilen durch Warmpressen wird ein Halbzeug (24) verwendet, weiches aus trockenen, lockeren Decklagen (10, 15) aus Verstärkungsmaterial und einem Haufwerk (9) aus Reaktionsharz (5) sowie in Form und Volumen änderbaren Elementen (7) als Kern (22) besteht.

FIG. 1

EP 0 280 154 A2

## Formbares Halbzeug für die Fertigung biegesteifer Formteile

Die Erfindung betrifft ein formbares Halbzeug, insbesondere mit flächenartiger Ausdehnung, für eine Fertigung biegesteifer Formfertigteile, enthaltend flexible Decklagen aus trockenen Bewehrungsmatten mit offenen Freiräumen in Richtung des Kernes, der Harz enthält, und ein Verfahren zu seiner Herstellung.

Heute werden Bauteile aus Kunststoff vielfach in Sandwichbauweise hergestellt, um durch Kombination vorteilhafter Eigenschaften der verschiedenen Stoffe optimale Ergebnisse zu erzielen.

Bekannt ist ein FRM (foam reservous moulding) Verfahren, bei dem nacheinander eine trockene Faserverstärkung, ein mit Epoxidharz getränkter Schaumstoff und eine weitere trockene Faserverstärkung in ein Werkzeug eingelegt wird. Beim Zusammenfahren der Form wird die Faserverstärkung unter relativer Bewegung zum Schaumstoff mittels diesem gegen die Formwandung gedrückt, wobei die Luft solange über die Faserverstärkung entweichen kann, bis diese sich beim weiteren Zusammendrücken des Schaumstoffes mit dem Epoxidharz füllt.

Der Nachteil dieses Verfahrens besteht darin, daß die Beschickung der Presse umständlich ist und daß bei diesem Vorgehen eine Faltenbildung innerhalb der Faserverstärkung insbesondere bei größeren Verformungen nicht zuverlässig verhindert werden kann. Auch die Verteilung des Kunstharzes innerhalb des Kernbereiches ist sehr unterschiedlich, da sie stark von der Verformung des in seiner Lage nicht verschiebbaren Schaumstoffes und damit von dem dort vorhandenen Porenvolumen abhängt.

Weiter sind Prepregs bekannt, bei denen die Verstärkungslagen schon von Anfang an mit Harz durchtränkt sind.

Solche kompakten Prepregs haben den Nachteil, daß das erforderliche Gleiten an der Formwandung bei starken Krümmungen durch die bis zur Oberseite durchgehende Harztränkung erschwert wird, wodurch eine schlechte Ausfüllung der Form und eine ungewollte Verschiebung der Verstärkungslagen hervorgerufen werden kann.

Aufgabe der Erfindung ist es, ein lagerfähiges in der Nachverformung biegeweiches, unter Verwendung von Kunststoff aufgebautes Halbzeug zur Anfertigung leichter biegesteifer Formfertigteile einschließlich einem Verfahren zu seiner Herstellung zu finden.

Das Halbzeug sollte je nach späterem Einsatzzweck eine flächige oder räumliche Form besitzen, wobei diese äußere Gestalt entweder direkt oder beispielsweise durch Schneiden, Sägen, Stanzen oder Bohren aus Bahnen bzw. Platten hergestellt werden kann.

Das Halbzeug sollte auch nach langer Lagerzeit noch gut verformbar sein und eine Oberfläche besitzen, die sich beim Formen des Formfertigteiles ohne Schwierigkeiten der Werkzeugkontur anpaßt.

Das Halbzeug sollte entsprechend den statischen und dynamischen Anforderungen in jedem Bereich optimal ausgelegt werden können.

Das Halbzeug sollte ohne spezielle chemische Kenntnisse von den gleichen Produzenten, die bisher mit Blech gearbeitet haben, auf ihren bekannten Warmpressen bzw. Umformaggregaten in einem Arbeitsgang unter möglichst geringer Handhabung zu einem biegefesten Formfertigteil mit einwandfreier Oberflächenbeschaffenheit form-und fixierbar sein.

Die Aufgabe wird erfindungsgemäß dadurch gelöst, daß zwischen den auf Abstand gehaltenen Decklagen als Kern ein fixiertes Haufwerk aus einzelnen, räumlichen, im Volumen und/oder Form änderbaren Elementen und Reaktionsharz angeordnet ist.

Es ist überraschend, daß es möglich ist, ein Halbzeug auf Kunststoffbasis für die Formfertigteilproduktion bereitzustellen, welches trotz starkem Verformungsgrad minimale Materialbeanspruchungen aufweist und welches auf bekannten Warmpressen zu leichten, biegefesten, flachen oder mehrdimensional gebogenen Formfertigteilen, die bisher wirtschaftlich nur aus Blech gefertigt werden konnten, verarbeitet werden kann. Bei der Formgebung tritt nämlich infolge der erfindungsgemäßen Anordnung eines Haufwerkes zwischen den sich der Kontur des Werkzeuges anpassenden Decklagen nur eine Relativbewegung der einzelnen Elemente zueinander auf, die noch das anwesende Reaktionsharz mit einer Viskosität von 500 bis 10 000 mPas erleichtert. Durch weitere Verdichtung (1:2 bis 1:20) des Haufwerks fließt dann ein Teil des Harzes aus den gefüllten Zwischenräumen zwischen den Elementen infolge des Druckgefälles zu den Freiräumen in die lockeren Deckenlagen. Es entsteht so ohne die sonst bei Verformung übliche Materialbeanspruchung ein Formfertigteil mit einem leichten Kern aus einem wegen der günstigen Porenstruktur tragfähigen Harzgerüst sowie beidseitiger äußerer kompakter Kunststoffschicht, die durch Bewehrungsmatten mit einem Anteil von 30 bis 70 Gew.-%, insbesondere einem Anteil von 40 bis 60 Gew.-& verstärkt ist.

Das erfindungsgemäße Halbzeug läßt Verformungsgrade, die das Verhältnis Projektion zur Abwicklung angeben, von 5 bis 35 %, insbesondere von 12 bis 25 %, und Dickensprünge von 1:20 beispielsweise bei Wandstärken bis zu 30 mm mit einer maximalen (Ausform)Neigung der Flanken bis zu 85° zu.

Der Harzanteil im Haufwerk des Halbzeuges sollte - volumenmäßig gemessen - 1/10 bis 1/100, insbesondere 1/20 bis 1/60 des Volumens der Elemente betragen. Die Strukturviskosität des Reaktionsharzes bei der Herstellung des Halbzeuges sollte kleiner 10 000 mPas sein, insbesondere vorzugsweise im Bereich zwischen 500 und 1600 mPas liegen und hinterher schnell auf 20 000 mPas bzw. mehr ansteigen, um eine Entmischung während des Lagerns oder Handhabens des Halbzeuges zu vermeiden.

Durch Verbindungen der äußeren Decklagen wird die Maßhaltigkeit des Halbzeuges eingehalten.

Starre Abstandshalter können durch Ausbildung einer Haftbrücke im Reaktionsharz mittels örtlicher Erwärmung durch HF Feld oder Laserstrahlen hergestellt werden, wobei vorteilhafterweise ein Sintereffekt ausgenutzt wird. Besonders geeignet für solche Zwecke ist ein Haufwerk, bei dem die Elemente mit Harz ummantelt werden.

Für flexible Abstandshalter bieten sich Fasern oder Filamente an, die durch Nadeln oder Einweben die Verbindung der äußeren Decklagen herstellen.

Schließlich sind nach außen angebrachte Schrumpffolien als Abstandshalter denkbar, die neben dem mechanischen Schutz vor allen Dingen ein Verdunsten bzw. eine Reaktion des Harzes durch Luft vermindern helfen.

Die Decklagen bestehen vorzugsweise aus Fasern, Filamenten, Fäden oder Drähten auf der Basis Glas, Kohle, Aramid oder Metall und sind in Form von Geweben, Netzwerken, Gewirken, Gelegen oder Vliesen untereinander verbunden. Denkbar sind auch Verstärkungslagen, die auße eine geschlossene Oberfläche und in Richtung des Kernes Vertiefungen besitzen, deren gesamte Abwicklungsfläche größer als das 1,5-fache der vorderen Ansichtsfläche ist.

Die Decklagen ermöglichen das Halbzeug so auszulegen, daß an jeder Stelle des Formfertigteiles eine den statischen Erfordernissen optimal angepaßte Bewehrung eingebaut werden kann.

Weiter kann durch lockere Zulagen (Vlies) zur Bewehrung die Dicke der äußeren kompakten Kunststoffschicht beeinflußt werden, da hierdurch Freiräume für das Reaktionsharz geschaffen werden. Durch eine solche Maßnahme kann der Schutz gegen äußere mechanische Angriffe sowie die Oberfläche verbessert werden.

Schließlich ist es möglich, eine Armierung des Kernes durch Zumischen von Faserschnitzeln, Hohlkügelchen, Massivkügelchen und/oder Flakes einzubauen. Diese Verstärkungszulagen richten sich eingentümlicherweise im Harzbett entlang der Wandungen der Elemente aus und verstärken so die Porenwände, wodurch u.a. die Kernschubfestigkeit wesentlich verbessert wird.

Als Elemente werden organische oder anorganische vorwiegend elastische Körper verwendet, die unter Wärmezufuhr oder unter Druck kompressibel oder expansibel sind und/oder deren Gestalt zumindest unter Einwirkung von äußeren Kräften veränderbar ist. Insbesondere sollten die Körper mindestens teilweise unter Wärme verflüchtigbar sein, wobei ein entstehendes geeignetes Gas vorteilhafterweise zur beschleunigten Aushärtung des Harzes im Formfertigteil herangezogen werden könnte.

Die Gestalt der Elemente kann beliebig sein. Vorzugsweise werden Kugeln von 2 bis 8 mm bzw. 3 bis 5 mm und symmetrische Vielflächen eingesetzt, wobei erstgenannte bei optimaler Verteilung noch ein Zwickelvolumen von etwa 25 % aufweisen, das durch zusätzliche Korngrößen auf 10 % reduziert werden kann.

Als spezielle Werkstoffe können ganz oder teilweise vorgeschäumte oder expandierte Perlen aus synthetischen Stoffen beispielsweise aus Polyethylen, Polystyrol, Polypropylen, Polyurethan und Naturstoffen wie Getreide verwendet werden, wobei das Raumgewicht zwischen 20 bis 50 kg/m$^3$ liegt.

Die beim Halbzeug eingesetzten flüssigen Reaktionsharzsysteme besitzen während der Mischung des Haufwerkes eine Struktur-Viskosität vorzugsweise zwischen 600 bis 3000 mPas, die einerseits ausreicht eine gute Verteilung ohne Zerstörung empfindlicher Elemente zu gewährleisten und andererseits nicht zur unerwünschten Durchnässung der Decklagen aus Glasfasern führt. Ein weiterer Vorteil ist die bei bestimmten Lagerbedingungen geringe Reaktion des Harzes, so daß gegebenenfalls eine erforderliche Zwischenlagerung (1 bis 3 Monate) ohne Bedenken möglich sind. Dagegen tritt beim Fertigprodukt in der Warmpresse evtl. unter Beaufschlagung mit Gas cder HF Feld schon eine Aushärtung in wenigen Minuten ein, die erlaubt, das Fertigprodukt nach kurzer Zeit zu entformen.

Eine andere Möglichkeit der Einbringung des Reaktionsharzes in das Haufwerk besteht darin, mittels eines gesonderten unter Wärme flexiblen Klebers ein pulveriges Reaktionsharzsystem entlang der Oberfläche der Elemente einzubringen. Dies hat den Vorteil, daß es kaum vorzeitig reagiert, da die Komponenten getrennt sind.

Als Reaktionsharze haben sich Polyester-, Epoxy-, Resorcin-, Polyurethan-, Phenolformaldehyd-Harze und Mischungen aus Harzen, z.B. Polyesterharz/Epoxyharz bewährt.

Die Aufgabe wird weiter durch ein erfindungsgemäßes Verfahren zur Herstellung des beanspruchten Halbzeuges gelöst, indem als Kern ein temperiertes Haufwerk aus Reaktionsharz und aus im Volumen bzw. in Form änderbaren Elementen, welches vorher in einem Mischer in einem Mengenverhältnis von 1:10 bis 1/100, insbesondere 1/20 bis 1/60 gemischt wurde, auf die untere flexible Decklage aufgegeben wird und daß nach Zuführung der oberen flexiblen Decklage und nach Kalibrierung ein Verbund zwischen beiden Decklagen hergestellt wird.

Durch diese Kontianlage ist es möglich, ein Haufwerk aus Harzsystemen mit einer Strukturviskosität von 600 bis 3000 mPas und leichten Elementen zwischen zwei offenen, flexiblen Decklagen so einzubauen, daß keine Entmischung beim Einbau, beim Lagern und bei späterer mechanischer Bearbeitung wie Schneiden, Stanzen und Sägen auftritt. Andererseits kann bei der Weiterverarbeitung zum Formfertigteil das Halbzeug - schon durch geringe Wärmezuführ in sich so flexibel gemacht werden, daß ein hoher Verformungsgrad 5 bis 45 % und eine Verdichtung von 1:20 bis 1:6 ohne Zerstörung des tragenden Werkstoffes möglich sind. Weiter ist durch Variation der Freiheitsgrade beim Harzsystem wie Menge bzw. Eigenschaft, beim Element wie Größe, Volumenänderung bzw. Gestaltung und beim Verstärkungsstoff wie Struktur bzw. Werkstoff - schon im Halbzeug das spätere Festigkeitsprofil des Formfertigteils vorausbestimmbar.

Vorteilhafter ist es, das Haufwerk durch Vibration weitgehend zu verdichten. Hierdurch wird der Zusammenhalt des Haufwerks verbessert. Auchder Abfluß des Reaktionsharzes in die Decklagen bei der Endfertigung wird erleichtert, da der Hubweg reduziert und weniger Falschluft entweichen muß.

Durch die vollständige Ummantelung der Elemente mit Reaktionsharz wird eine gleichmäßige Verteilung erreicht, die neben einer guten Haftung im Haufwerk gleichmäßige Produktionsbedingungen für einen optimalen Kernaufbau bei der Weiterverarbeitung schafft.

Die gleichmäßige Anbringung eines Pulvers aus einem Reaktionsharzsystem, welches aus mehreren getrennten Komponenten bestehen kann, auf der Oberfläche eines Elementes durch eine flexible Klebeschicht hat den Vorteil, daß bis zum Schmelzen in der Endfertigung keine Reaktionen im Harz eintstehen.

Die Heftung beider Decklagen und evtl. der Verbund der Elemente kann in bestimmten Bereichen durch Wärmestrahlen erfolgen, wobei vorzugsweise nur so viel Wärme zugeführt wird, daß die einzelnen Reaktionsharzteilchen aneinander sintern, um eine geringe Vorreaktion zu erreichen.

Die mechanische Verbindung der beiden Decklagen durch Filamente ist aufwendig aber sehr sicher.

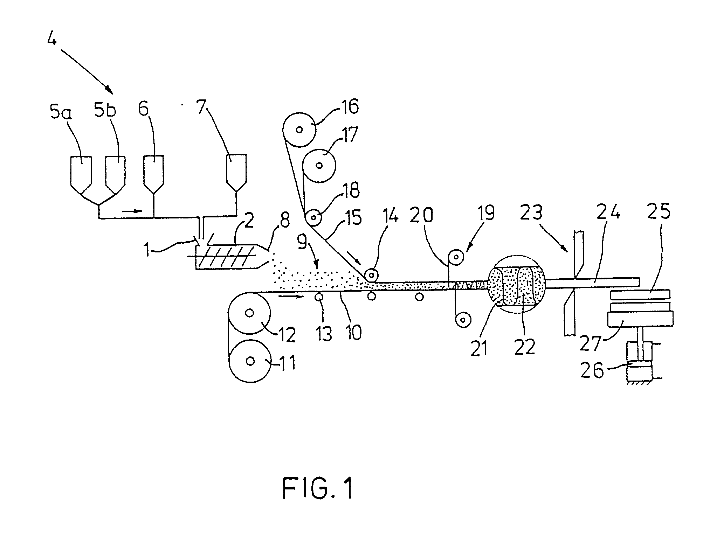

Ein Beispiel der Erfindung ist in der Zeichnung dargestellt und wird im folgenden näher erläutert. Die Figur zeigt ein Ablaufschema zur Herstellung von Halbzeug.

In den Trichter 1 des Mischers 2 münden die Zulaufleitungen 3 der Behälter 4 für die Komponenten 5a, 5b des Reaktionsharzes 5, die Verstärkungszuschlagstoffe 6 und die Elemente 7. Die Austrittsöffnung 8 des Mischers 2 liegt über einer unteren Decklage 10, die vorher von einer Vorratsrolle 11 aus Verstärkungsmaterial abgezogen und über Umlenk-sowie Stützrollen 12, 13 horizontal geführt wird. In Förderrichtung versetzt zur Austrittsöffnung 8 des Mischers 2 wird von oben über eine Kalibrierwalze 14 eine obere Decklage 15 zugeführt, die beispielsweise von einer Vorratsrolle 16 für Verstärkermaterial und einer Vorratsrolle 17 für Vlies durch Doublierung über eine Umlenkrolle 18 entstanden ist. Es folgt eine Vernadelungsvorrichtung 19 mit Filamenten 20 als Abstandshalter 21 der Decklagen 10, 15 beiderseits des Kerns 22 und eine Ablängvorrichtung 23. Das Halbzeug 24 wird in Platten 25 geschnitten und vor dem Abtransport auf einem hydraulisch in der Höhe über Kolben 26 verstellbaren Tisch 27 gestapelt.

Vor der Herstellung des Halbzeuges werden Reaktionsharze, Elemente, Verstärkungszuschlagstoffe und Verstärkungsmaterial einschließlich evtl. Vlieszulagen unter Beachtung von Lagerfähigkeit und Handhabungsmöglichkeit des Halbzeuges sowie im Hinblick auf Dicke, Gewicht, Verarbeitungsbedingungen, Festigkeit und Aussehen des Formfertigteils ausgewählt.

Die beiden Komponenten des Reaktionsharzes werden zusammengeführt und mit evtl. Verstärkungszuschlagstoffen sowie perlförmigen in Volumen bzw. in Gestalt veränderbaren Elementen einem Mischer zugeführt. Während des Mischvorganges entsteht - nachdem die Elemente mit Reaktionsharz bedeckt und gegebenenfalls mit Verstärkungszuschlagstoffen umgeven sind - ein Premix in Form eines Haufwerkes, welches über die Austrittsöffnung auf eine untere Decklage aus Glasfasergewebe fällt, welches von einer Vorratsrolle abgezogen und nach Richtungsänderung an einer Umlenkrolle horizontal über Stützrollen geführt wird. Die Schüttung kann einschichtig oder mehrschichtig aufgebracht werden, wobei zur Verbesserung der Festigkeit letzten Fall unterschiedliche Haufwerke aus verschiedenen Mischern evtl. mit Bewehrung-Zwischenlagen vorteilhaft sein können. Das Haufwerk wird mit einer oberen Decklage bedeckt, die beispielsweise aus Glasgewebe zur Bewehrung und lockerem Flies zur Vergrößerung der Dicke der Deckschicht beim Fertigprodukt bestehen kann. Das Haufwerk kann durch Vibration evtl. unter Vakuum verdichtet werden. Anschließend erfolgt die Formgebung durch eine Kalibrierwalze, die je geforderten Halbzeugabmessungen profiliert oder glatt sein kann.

Schließlich wird der lagenaufbau fixiert. Das kann durch Versteppen in Form einer Matrazenfertigung oder durch Vernadelung mit flexiblen Filamenten oder Fäden geschehen.

Das so fixierte Halbzeug wird dann direkt zur Fertigung oder nach dem Schneiden zu Platten ins Zwischenlager abgegeben.

Zur Herstellung des Fertigproduktes wird das Halbzeug zugeschnitten und in ein beheiztes Formwerkzeug bei Temperaturen von 50 bis 180°C, insbesondere 80 bis 120°C, eingelegt, wodurch die Viskosität des Reaktionsharzes un damit der starre Verbund des Haufwerks reduziert wird. Durch Zusammenfahren der Pressestempel gleiten die trockenen anpassungsfähigen Decklagen an den Konturen des Werkzeuges und die Elemente bewegen sich relativ zueinander bis die gesamte Form ausgefüllt ist. Unter einem Pressendruck von ≦10 bar erfolgt nun eine 2 bis 6-fache, insbeondere 3 bis 4-fache Verdichtung, wobei ein Teil des Reaktionsharzes infolge des Druckgefälles in die Decklagen fließt und dort eine glatte durchgehende verstärkte Außenschicht bildet, während der zurückgebliebene Teil eine ausgerundete Porenstruktur bildet. Die Aushärtung erfolgt in wenigen Minuten je nach Reaktionsharz und Temperatur, wobei dieser Vorgang noch durch ein HF Feld bzw. unter Einfluß eines in den Elementen eingebauten Gases beschleunigt werden kann.

Beispiel

Das Halbzeug wird nach dem vorbeschriebenen Verfahren hergestellt, wobei folgende Rezepturen verwendet wurden:

| Nr. | Kernlage EPS/EP/GF (g) | Decklage Glasgewebe/Glasmatte (g/m²) | |
|---|---|---|---|
| 1 | 150/250/50 | 70 | |
| 2 | 150/500/100 | | 450 |
| 3 | 150/500/100 | 1000 | |
| 4 | 150/750/150 | 1000 | |

Nach einem Zuschnitt wurde das Halbzeug zur Fertigung von Probeplatten in ein beheiztes Formwerkzeug eingelegt und unter einem Pressendruck von <10 bar vorverpreßt. Das Halbzeug erfährt nach der Vorformung eine 4-fache Verdichtung, wobei das verdrängte Harz in Richtung der Deckschichten fließt und mit diesen eine verstärkte Harzschicht bildet. Die anschließende Aushärtung geht von der Formwerkzeugoberfläche in Richtung Kernmitte bei Temperaturen von 80° vor sich. Nach einer Formstandzeit von 5 bis 15 min eintsteht ein biegefester Körper, der im Kern eine hohlkugelige Zellstruktur aufweist, dessen Zellwände durch die beigemengten Verstärkungszuschlagstoffe verstärkt sind.

An Prüfplatten von 400 x 400 x 17 mm wurden Biegeversuche mit linienförmiger Krafteinleitung durchgeführt und folgende Bruchkräfte und Steifigkeiten ermittelt:

| Probe Nr. | RG g/cm³ | Bruchkraft KN | Verformung mm | Steifigkeit N/mm |
|---|---|---|---|---|
| 1 | 0,26 | 3,75 | 9,0 | 462 |
| 3 | 0,41 | 7,90 | 12,1 | 800 |
| 4 | 0,5 | 10,00 | 14,0 | 922 |

Bei Dauerschwingbeanspruchung von mehr als 60 % der Kurzzeitbruchlasten zeigten die Prüfplatten nach 10[6] LW keine Schädigung:

| Probe Nr. | RG g/cm³ | Kraft max. KN | Verformung mm | Lastspiele |
|-----------|----------|---------------|---------------|------------|
| 2 | 0,35 | 4 | 4,1 | $10^6$ |
| 3 | 0,41 | 4 | 3,0 | $10^6$ |
| 4 | 0,5 | 4 | 3,0 | $10^6$ |

## Ansprüche

1. Formbares Halbzeug - insbesondere mit flächenartiger Ausdehnung - für eine Fertigung biegesteifer Formfertigteile, enthaltend flexible Decklagen aus trockenen Bewehrungsmatten mit offenen Freiräumen in Richtung des Kernes, der Harz enthält, dadurch gekennzeichnet, daß zwischen den auf Abstand gehaltenen Deklagen (10, 15) als Kern (22) ein fixiertes Haufwerk (9) aus einzelnen, räumlichen, im Volumen und/oder Form veränderbaren Elementen (7) und Reaktionsharz (5) angeordnet ist.

2. Formbares Halbzeug nach Anspruch 1, dadurch gekennzeichnet, daß die Decklagen (10, 15) über Abstandshalter (21) in Form von Brücken aus Reaktionsharz (5) miteinander verbunden sind.

3. Formbares Halbzeug nach Anspruch 1, dadurch gekennzeichnet, daß die Decklagen (10, 15) über Abstandshalter (21) in Form von flexiblen Verbindungen miteinander verbunden sind.

4. Formbares Halbzeug nach Anspruch 1, dadurch gekennzeichnet, daß die Decklagen (10, 15) über Abstandshalter (21) in Form von außenliegender Schrumpffolie gehalten sind.

5. Formbares Halbzeug nach den Ansprüchen 1 bis 4, dadurch gekennzeichnet, daß die Decklagen (10, 15) mindestens teilweise nach statischen und/oder konstruktiven Erfordernissen verstärkt sind.

6. Formbares Halbzeug nach den Ansprüchen 1 bis 5, dadurch gekennzeichnet, daß die Decklagen (10, 15) im Bereich der äußeren Oberfläche mit gut gleitendem Wirkstoff versehen sind.

7. Formbares Halbzeug nach den Ansprüchen 1 bis 6, dadurch gekennzeichnet, daß das Haufwerk (9) aus mehreren, zumindestens teilweise verschiedenen zusammengesetzten Bereichen besteht.

8. Formbares Halbzeug nach den Ansprüchen 1 bis 7, dadurch gekennzeichnet, daß die Abmessungen der räumlichen Elemente (7) aus geschäumten oder expandierten organischen oder anorganischen Stoffen durch Druck und/oder Temperatur veränderbar sind.

9. Formbares Halbzeug nach Ansprüchen 1 bis 8, dadurch gekennzeichnet, daß das Element (7) durch Wärme freiwerdende Bestandteile zum Härten des Reaktionsharzes enthält.

10. Formbares Halbzeug nach den Ansprüchen 1 bis 9, dadurch gekennzeichnet, daß das Reaktionsharz (5) im Halbzeug (24) innerhalb des Temperaturbereiches von 50 bis 180°C eine Strukturviskosität von ≤ 20 000 mPas insbesondere ≤ 5000 mPas, besitzt.

11. Verfahren zur Herstellung eines formbaren Halbzeuges gemäß den Ansprüchen 1 bis 10, indem auf einer unteren kontinuierlich laufenden trockenen, mit offenen Ausnehmungen versehenen Decklage ein ein Kern aufgebracht wird, der über eine Walze mit einer entsprechenden oberen Decklage versehen wird, dadurch gekennzeichnet, daß als Kern (22) ein temperiertes Haufwerk (9) aus Reaktionsharz (5) und aus im Volumen bzw. in Form änderbaren Elementen (7), welches vorher in einem Mischer (2) in einem Mengenverhältnis von 1/10 bis 1/100 gemischt wurde, auf die untere flexible Decklage (10) aufgegeben wird und das nach Zuführung der oberen flexiblen Decklage (15) und nach Kalibrierung ein Verbund zwischen beiden Decklagen (10, 15) hergestellt wird.

12. Verfahren zur Herstellung eines formbaren Halbzeuges nach Anspruch 11, dadurch gekennzeichnet, daß in verschiedenen Bereichen Haufwerk (9) unterschiedlichen Aufbaues eingebracht wird.

13. Verfahren zur Herstellung eines formbaren Halbzeuges nach den Anspüchen 11 bis 12, dadurch gekennzeichnet, daß das Haufwerk (9) zur Ausfüllung des Raumes zwischen den Decklagen durch Vibration kompaktiert wird.

14. Verfahren zur Herstellung eines formbaren Halbzeuges nach den Ansprüchen 11 bis 13, dadurch gekennzeichnet, daß die Elemente (7) mindestens teilweise mit einer Schicht aus Reaktionsahrz (5) umgeben werden.

15. Verfahren zur Herstellung eines formbaren Halbzeuges nach den Ansprüchen 11, dadurch gekennzeichnet, daß das Reaktionsharz (5) in Form eines Pulvers oder Granulats mittels eines mindestens bei erhöhter Temperatur flexiblen Klebers an der Oberfläche der Elemente (7) befestigt wird.

16. Verfahren zur Herstellung eines formbaren Halbzeuges nach den Ansprüchen 11 bis 15, dadurch gekennzeichnet, daß die Decklagen (10, 15) über kurzzeitige gerichtete Erwärmung des die Elemente (7) umgebenden Reaktionsharzes (5) zwecks punktweiser Sinterung desselben verbunden werden.

17. Verfahren zur Herstellung eines formbaren Halbzeuges nach den Ansprüchen 11 bis 16, dadurch gekennzeichnet, daß die Decklagen (10, 15) durch Vernaldeln mittels flexibler Filamente (20) und/oder Fäden verbunden werden.

18. Verwendung eines Halbzeugs gemäß den Ansprüchen 1 bis 17 für ein biegefestes Formfertigteil, insbesondere eines flächigen Formfertigteils, dadurch gekennzeichnet, daß das einteilige unter Wärmezuführ flexible, vorkonfektionierte Halbzeug in einer Warmpresse durch Formen, Verdichten und Härten für ein Formfertigteil mit außen kompakten verstärkten Reaktionsharzschichten und innen porigem Kern bei einheitlicher Kunststoffmatrix verwendet wird.

FIG. 1